**Europäisches Patentamt**

**European Patent Office**

**Office européen des brevets**

(19)

(11) Veröffentlichungsnummer : **0 294 705 B1**

# EUROPÄISCHE PATENTSCHRIFT

(12)

(45) Veröffentlichungstag der Patentschrift :
**10.04.91 Patentblatt 91/15**

(51) Int. Cl.⁵ : **B29D 7/01**, B29C 71/00,
B29C 59/04, B29C 55/18,
// B29L7:00

(21) Anmeldenummer : **88108829.8**

(22) Anmeldetag : **02.06.88**

(54) Verfahren und Vorrichtung zur Herstellung von Kunststoffolien.

(30) Priorität : **06.06.87 DE 3719242**

(43) Veröffentlichungstag der Anmeldung :
**14.12.88 Patentblatt 88/50**

(45) Bekanntmachung des Hinweises auf die
Patenterteilung :
**10.04.91 Patentblatt 91/15**

(84) Benannte Vertragsstaaten :
**AT BE CH DE ES FR GB IT LI NL SE**

(56) Entgegenhaltungen :
**AT-B- 124 265**
**DE-B- 1 213 107**
**DE-B- 1 504 816**

(73) Patentinhaber : **Röhm GmbH**
**Kirschenallee Postfach 4242**
**W-6100 Darmstadt 1 (DE)**

(72) Erfinder : **Vetter, Heinz, Dr. Ing.**
**Taunusstrasse 92**
**W-6101 Rossdorf 1 (DE)**

## Beschreibung

Die Erfindung betrifft ein Verfahren und eine Vorrichtung zur Herstellung geglätteter Kunststoffolien, vor allem von solchen mit einer Dicke von weniger als 300 Mikrometer, durch Extrusion einer Kunststoffschmelze aus einer Schlitzdüse und Glätten der extrudierten Bahn in einem Glättwerk.

## Stand der Technik

Das Glätten von Folien unter 300 Mikrometer in einem Glättwerk ist schwierig, weil die Schmelze im Glättspalt bereits einfriert. Es ist deshalb praktisch nicht möglich, durch einen Wulst von thermoplastischer Kunststoffmasse am Walzeneinlauf vor dem Walzenspalt Dickenschwankungen der extrudierten Bahn auszugleichen. Man erreicht zwar gemäß DE-AS 1 251 188 eine befriedigende beidseitige Glättung, wenn der Walzenspalt aus einer polierten Stahlwalze und einer hochglänzenden Gummiwalze gebildet wird. Jedoch überstehen hochglänzende Gummiwalzen nur kurze Laufzeiten. Auch Andruckwalzen aus anderen Werkstoffen mit einem wesentlich niedrigeren E-Modul als Stahl, wie z.B. Polyamid, das gemäß DE-C 3 013 576 verwendet werden kann, haben nur eine begrenzete Laufzeit.

Eine längere Laufzeit wird gemäß DE-C 3 421 800 mit einer Andruckwalze erreicht, die einen Belag aus elastischem Material und über diesem einen rohrförmigen dünnwandigen Glättmantel aus poliertem Stahl enthält. Walzen dieser Ausführungsform sind jedoch steifer als Gummiwalzen. Das führt dazu, daß eng benachbarte Dichteschwankungen in der Schmelzebahn nicht ausgeglichen werden, weil die Bahn nicht vollflächig die Walzen berührt. Optische Störungen sind die Folge.

Aus der DE-A 33 19 279, JP-A 57 22 019, JP-A 59 57 720 und JP-A 56 62 122 sind Verfahren bekannt, bei denen eine aus einer Schlitzdüse extrudierte Kunststoffbahn zusammen mit einem dauernd umlaufenden endlosen Glättband durch ein Walzenglättwerk läuft. Es ist jedoch schwierig, ein Glättband mit einer Oberflächenqualität, die sich mit derjenigen einer polierten Walzenoberfläche vergleichen läßt, herzustellen und über eine lange Betriebszeit aufrechtzuerhalten. Die ohnehin weniger gute Bandoberfläche wird durch Ablagerungen von ausgeschwitzten Formmassenbestandteilen und durch anhaftenden Staub schneller beeinträchtigt als die Oberfläche einer Walze in einem Glättwerk.

## Aufgabe und Lösung

Der Erfindung liegt die Aufgabe zugrunde, ein Verfahren und eine dafür geeignete Vorrichtung zu finden, um im Walzenspalt eines Glättwerks während einer praktisch unbegrenzten Laufzeit eine befriedigende beidseitige Glättung dünner Bahnen aus extrudiertem Kunststoff zu erreichen. Diese Aufgabe wird durch das Verfahren und die Vorrichtung gemäß den Patentansprüchen gelöst.

Der Grundgedanke der Erfindung liegt in den Verwendung der beim Verfahren selbst erzeugten geglätteten Folienbahn als glättende Oberfläche der Andruckwalze im Walzenspalt ; diese wird nachfolgend als Glättfolie bezeichnet. Die Andruckwalze braucht nicht kühlbar zu sein und trägt vorzugsweise eine elastische Oberflächenschicht. Da diese nicht unmittelbar mit der extrudierten Bahn in Berührung tritt, braucht sie nicht hochglänzend zu sein. Infolgedessen wird eine hohe Laufzeit erreicht, die allenfalls durch Materialermüdung und dergl., aber nicht durch eine Veränderung der Oberflächenqualität begrenzt ist.

Die Dicke der extrudierten Bahn ergibt sich aus der Extrusionsleistung der Schlitzdüse und aus der Abzugsgeschwindigkeit der Glättwalzen. Diese beiden Größen müssen so aufeinander abgestimmt sein, daß die extrudierte Bahn mit der angestrebten Solldicke in den Walzenspalt einläuft. Im Walzenspalt stellt sich in der Bahndicke entsprechender Abstand der Walzenoberflächen von selbst ein.

Der Erfindungsgedanke besteht darin, die durch das Verfahren selbst hergestellte, geglättete und gekühlte Folienbahn als Glättfolie einzusetzen. Besonders vorteilhaft ist es, die aus dem Walzenspalt ausgetretene Bahn, die an der gekühlten Glättwalze geglättet worden ist, unmittelbar als Glättfolie in den Walzenspalt zurückzuleiten und danach als Produkt abzunehmen. Überraschenderweise wird die als Glättfolie durch den Walzenspalt laufende Folie durch die heiß eintretende extrudierte Folienbahn nicht in solchem Maße erhitzt, daß die Bahnen zusammenschweißen ; sie lassen sich nach dem Austritt aus dem Walzenspalt ohne weiteres von einander trennen.

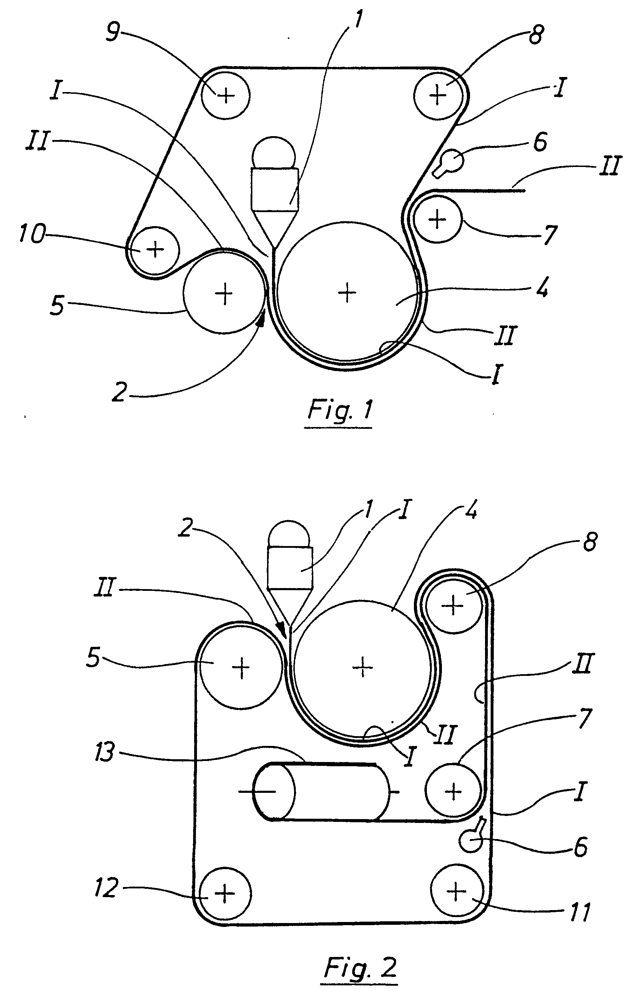

Zwei Ausführungen der bevorzugten Betriebsweise sind in den Figuren 1 und 2 schematisch dargestellt.

**Figur 1** zeigt im Schnittbild die Walzenanordnung gemäß Anspruch 13.

**Figur 2** zeigt in gleicher Darstellungsweise die Anordnung gemäß Anspruch 13.

## Ausführung der Erfindung

Nach dem Verfahren der Erfindung lassen sich thermoplastische Kunststoffe verarbeiten, die extrudierbar sind und sich zur Herstellung dünner Kunststoffolien eignen, insbesondere solche mit einer Glastemperatur über 50°C und einem E-Modul über 50 N/qmm. Dazu zählen beispielsweise Polymethylmethacrylat, Polycarbonat, Polyolefine, thermoplastische Polyester, Polystyrol und ABS-Kunststoffe, Polyvinylchlorid, Polysulfone, Polyäther, Polyätherimide und Polyäther-ätherketone.

Die Dicke der hergestellten Folie kann im Bereich von 5 Mikrometer bis 1 mm liegen und liegt in der Regel weit unter 300 Mikrometer, insbesondere im Bereich von 10 bis 100 Mikrometer. Die Extrusion erfolgt in üblicher Weise aus einer Breitschlitzdüse 1, die nahe an dem Walzenspalt 2 angeordnet ist.

Das Glättverfahren arbeitet nach dem Prinzip des Chill-Roll-Verfahrens, bei dem die extrudierte Bahn I zwischen einer Kühlwalze 4 und einer Andruckwalze 5 hindurchläuft und rasch unter die Erweichungstemperatur gekühlt wird.

Die Kühlwalze 4 hat meist einen größeren Durchmesser als die Andruckwalze. Die Umfangsgeschwindigkeiten beider Walzen 4 und 5 sind in der Regel gleichgroß, jedoch ist eine geringfügige Friktion ohne Nachteil. Der Anpreßdruck zwischen den Walzen 4 und 5 hängt von der Elastizität der Andruckwalze ab. Besteht diese aus Gummi oder einem ähnlichen Werkstoff mit einer Shore-Härte im Bereich von 60 bis 95, so kann ein Liniendruck von 1 bis 100 N/cm angewendet werden. Wenn eine unelastische oder wenig elastische Andruckwalze aus einem Werkstoff mit einem E-Modul über 1500 N/qmm, wie Polyamid, eingesetzt wird, so ist ein Liniendruck über 100 N/cm vorteilhaft. Die Oberfläche der Kühlwalze 4 ist in der Regel hochglänzend poliert. Sie kann aber auch eine andere charakteristische Struktur haben, wenn diese auf die Folienoberfläche übertragen werden soll, bespielsweise eine Mattierung oder Ornamentierung. Der Begriff "Glätten" wird hier in einem erweiterten Sinne gebraucht und umfaßt jede Ausbildung einer gewünschten gleichmäßigen Oberflächenstruktur und einer gleichmäßigen Dicke, bezeichnet aber vorzugsweise die Erzeugung eines hohen Glanzes.

Die Temperatur der extrudierten Kunststoffbahn und der Kühlwalze werden in üblicher Weise so aufeinander abgestimmt, daß die gewünschte Glättung erreicht wird, aber keine Verschweißung eintritt. Jedenfalls soll die extrudierte Bahn I eine Temperatur im thermoplastischen Bereich des Kunststoffes haben, die unterhalb der Temperatur liegt, bei der die beiden Bahnen I und II zusammenschweißen würden. Die Kühlwalze 4 wird zweckmäßig auf eine Temperatur nahe an der Erweichungstemperatur des extrudierten Kunststoffes eingestellt, so daß die Kunststoffbahn an der Stelle, wo sie von der Walze abgenommen wird, gerade nicht mehr klebt. In der Regel wird die Bahn I überwiegend oder ausschließlich auf der an der Kühlwalze 4 anliegenden Seite gekühlt. Die Andruckwalze 5 kann ebenfalls gekühlt bzw. temperiert werden, jedoch wird im Regelfall darauf verzichtet. Die Doppelbahn I/II folgt der Kühlwalze 4 auf einem ausreichenden Teil ihres Umfanges, um die geglättete Bahn I über ihre ganze Dicke unter die Erweichungstemperatur (Glastemperatur nach DIN 7724) abzukühlen. Danach läuft die Doppelbahn von der Kühlwalze 4 ab und wird an der Trennrolle 7 in zwei Bahnen I und II aufgetrennt. Die Glättfolie überträgt ihre Oberflächenstruktur als Gegenform auf die extrudierte Bahn. Wenn sie hochglänzend ist, was die Regel ist, so wird auch eine gleichwertige hochglänzende Oberfläche auf der daran anliegenden Seite der extrudierten Bahn erzeugt.

Die Glättfolie kann beispielsweise laufend von einer Vorratsrolle abgenommen und in den Walzenspalt geleitet werden. Man läßt die an der Kühlwalze gebildete Seite der Folie als Glättfolie auf die extrudierte Bahn einwirken, weil andernfalls zufällige Oberflächenfehler immer wieder auf neue Oberflächen übertragen würden. In diesem Falle kann man so vorgehen, daß die erzeugte Folie zu einer Rolle aufgewickelt, dann von der laufenden Bahn getrennt und als Glättfolie eingesetzt, danach erneut aufwickelt und als Produkt abgenommen wird. Diese Ausführungsform der Erfindung zeichnet sich durch apparative Einfachheit aus.

Es wird jedoch bevorzugt, die geglättete Bahn ohne Abtrennung unmittelbar als Glättfolie in den Walzenspalt zurückzuleiten. Dies kann mittels einer Anordnung von Umlenkwalzen gemäß Figur 1 oder 2 erfolgen. Gemäß Figur 1 wird die Bahn I an der Trennrolle 7 von der Bahn II getrennt und über die Umlenkrollen 8, 9 und 10 zur Andruckwalze 5 geleitet. Es ist vorteilhaft, die Bahn I auf ihrem Weg zur Andruckwalze nicht weiter abkühlen zu lassen. Bei dieser Anordnung befindet sich die Extrusionsdüse 1 innerhalb der von der Bahn I gebildeten Schleife, die deshalb groß genug sein muß, um die erforderliche Bedienung der Düsenlippen vornehmen zu können.

Die Anordnung gemäß Figur 2 gestattet ungehinderten Zutritt zur Düse 1. In diesem Falle wird die Bahn I nach Trennung von der Bahn II an der Trennrolle 7 mittels der Umlenkrollen 8, 11 und 12 auf der dem Walzeneinlauf gegenüberliegenden Seite des Glättwerks 4/5 zu dem Walzenspalt geleitet. Die Bahn II wird mittels der schräg zur Laufrichtung der Bahn angeordneten Umlenkrolle 13 aus dem Zwischenraum zwischen dem Glättwerk und der zurückgeführten Bahn I herausgeführt und als Produkt abgenommen.

Um optimalen Glanz zu erreichen, kann es zweckmäßig sein, die aus dem Walzenspalt austretenden Doppelbahn I/II zusammen noch durch wenigstens einen weiteren Walzenspalt zu führen und die Bahnen I und II erst dann von einander zu trennen. Die Trennung der Bahnen an der Umlenkrolle 7 kann durch ein Luftmesser 6 erleichtert werden. Dabei kann durch Ionisierung der Bildung elektrostatischer Aufladung entgegengewirkt werden.

BEISPIEL

Auf einem handelsüblichen Gießteil einer Chill-Roll-Anlage mit einer Fig. 1 entsprechenden Funktionsweise wurde eine 750 mm breite Folie, 75 Mikrometer dick, aus schlagzäher PMMA-Formmasse Typ PLEXIGLAS zk 30 wie folgt hergestellt:

Aus einer 900 mm breiten Breitschlitzdüse (1) wurde der Schmelzefilm ausgeformt, die Schmelztemperatur betrug 245 Grad C, die Düsentemperatur im Mittel 240 Grad C. Der Abstand vom Düsenmund bis zum Auflaufpunkt des Schmelzefilms auf die Kühlwalze (4) betrug 100 mm.

In den Walzenspalt, gebildet aus einer Andruckwalze (5), (Außendurchmesser 200 mm, temperierbar, Walze aus Stahl mit 10 mm dickem Shore 80-A hartem Gummimantel ausgerüstet) und der Kühlwalze (4) (polierte Stahlwalze 600 mm Durchmesser, auf 100 Grad C temperiert) liefen gleichzeitig der Schmelzefilm I und die 30 Grad C warme Folie II ein, die bei dem vorausgehenden Durchlauf durch den Walzenspalt an der Kühlwalze (4) geglättet worden war. Nach einer Umschlingung von 180 Grad an der Kühlwalze (4) lassen sich beide Folienbahnen nach der Umlenkwalze (7) (auf 40 Grad C temperierte, polierte Stahlwalze mit 80 mm Durchmesser) ohne Hilfsmittel von einander trennen.

Die Produktionsgeschwindigkeit betrug 20 m/min. Die Andruckwalze (5) wurde mit einem Liniendruck von 12 N/cm gegen die Kühlwalze gedrückt. Die Oberflächentemperatur des Gummis lag zu jedem Zeitpunkt unter 100 Grad C. Die so produzierte Folie war auf beiden Seiten hochglänzend.

Zum Vergleich wurde die Anlage ohne den Einlauf der Folie II betrieben. Die Folienoberfläche, die durch den Gummibelag gebildet wurde, war wesentlich matter als die auf der polierten Stahlwalze. Nach kurzer Laufzeit heizte sich der Gummimantel so auf, daß die Folie auf dem Gummi klebte und damit keine Produktion mehr möglich war. Auch durch Walzenkühlung mit 15 Grad C kaltem Wasser konnte unzulässiges Aufheizen der Gummioberfläche nicht vermieden werden.

**Ansprüche**

1. Verfahren zur Herstellung von Kunststoffolien durch Extrudieren einer Bahn aus thermoplastischem Kunststoff mittels einer Schlitzdüse (1) und Glätten der extrudierten Bahn im Walzenspalt (2) eines Glättwerks unter gleichzeitiger Abkühlung unter die Erweichungstemperatur, dadurch gekennzeichnet, daß zusammen mit der extrudierten Bahn I eine unter die Erweichungstemperatur gekühlte, geglättete Folienbahn II, aus dem gleichen Kunststoffmaterial, die in einem vorausgegangenem Arbeitsgang durch den Walzenspalt (2) hindurch geleitet worden war, in den Walzenspalt geleitet und nach der Kühlung der extrudierten Bahn I unter die Erweichungstemperatur die beiden Bahnen I und II voneinander getrennt werden.

2. Verfahren nach Anspruch 1, dadurch gekennzeichnet, daß die Bahnen I und II im Walzenspalt elastisch zusammengepreßt werden.

3. Verfahren nach Anspruch 1 oder 2, dadurch gekennzeichnet, daß die Bahn I nach dem Austritt aus dem Walzenspalt (2) und der Trennung von der Bahn II unmittelbar in den Walzenspalt (2) geleitet wird und daß die Bahn II von der Extrusionsanlage abgenommen wird.

4. Verfahren nach Anspruch 3, dadurch gekennzeichnet, daß die Bahn I über die Schlitzdüse (1) hinweg in den Walzenspalt geleitet wird.

5. Verfahren nach Anspruch 3, dadurch gekennzeichnet, daß die Bahn I auf der dem Walzeneinlauf gegenüberliegenden Seite des Glättwerks zu dem Walzenspalt (1) geleitet wird und daß die Bahn II mittels einer schräg zur Laufrichtung angeordneten Umlenkrolle aus dem Zwischenraum zwischen dem Glättwerk und der zurückgeführten Bahn I herausgeführt und abgenommen wird.

6. Verfahren nach wenigstens einem der Ansprüche 1 bis 5, dadurch gekennzeichnet, daß die Bahn I im Walzenspalt überwiegend auf der an der Glättwalze laufenden Seite gekühlt wird.

7. Verfahren nach wenigstens einem der Ansprüche 1 bis 6, dadurch gekennzeichnet, daß die extrudierte Bahn I mit einer Temperatur im thermoplastischen Bereichs des Kunststoffes, die unterhalb der zum Verschweißen mit der Bahn II erforderlichen Temperatur liegt, in den Walzenspalt geleitet wird.

8. Verfahren nach wenigstens einem der Ansprüche 1 bis 7, dadurch gekennzeichnet, daß die Bahn I in einer Dicke von weniger als 300 Micrometer erzeugt wird.

9. Vorrichtung zur Durchführung des Verfahrens gemäß den Ansprüchen 3 bis 8, enthaltend eine Schlitzdüse (1) zur Extrusion einer thermoplastischen Kunststoffbahn, ein in Fließrichtung hinter der Schlitzdüse angeordnetes Glättwerk, das wenigstens zwei einen Walzenspalt (2) bildende Glättwalzen (4, 5), von denen wenigstens eine (4) kühlbar ist, enthält, gekennzeichnet durch Mittel zur Rückleitung der aus dem Walzenspalt austretenden Bahn in den Walzenspalt.

10. Vorrichtung nach Anspruch 9, dadurch gekennzeichnet, daß eine der Glättwalzen eine Oberflächenschicht aus einem elastischen Werkstoff aufweist.

11. Vorrichtung nach den Ansprüchen 9 oder 10, dadurch gekennzeichnet, daß sie als Mittel zur Rückleitung der Bahn eine Mehrzahl von achsenparallel zu den Glättwalzen angeordnete Umlenkrollen enthält.

12. Vorrichtung nach Anspruch 11, dadurch gekennzeichnet, daß die Umlenkrollen einen Laufweg der rückgeleiteten Bahn über die Schlitzdüse hinweg festlegen.

13. Vorrichtung nach Anspruch 11, dadurch gekennzeichnet, daß die Umlenkrollen einen Laufweg der rückgeleiteten Bahn auf dem Walzenein-

lauf gegenüberliegenden Seite des Glättwerks festlegen und daß in dem Zwischenraum zwischen dem Glättwerk und dem Laufweg der zurückgeführten Bahn eine weitere Umlenkrolle schräg zur Laufrichtung angeordnet ist.

## Claims

1. Process for preparing plastics films by extruding a strip of thermoplastic plastics by means of a slotted die (1) and smoothing the extruded strip in the roller gap (2) of a smoothing mechanism with simultaneous cooling to below the softening temperature, characterised in that, together with the extruded strip I, a smoothed strip of film II of the same plastics material, cooled to below the softening temperature, which has been passed through the roller gap (2) in a preceding operation is fed into the roller gap and, after the extruded strip I has been cooled to below the softening temperature, the two strips I and II are separated from each other.

2. Process according to claim 1, characterised in that the strips I and II are resiliently pressed together in the roller gap.

3. Process according to claims 1 or 2, characterised in that, after leaving the roller gap (2) and being separated from the strip II, the strip I is fed directly into the roller gap (2) and the strip II is removed from the extrusion apparatus.

4. Process according to claim 3, characterised in that the strip I is fed through the slotted die (1) into the roller gap.

5. Process according to claim 3, characterised in that the strip I is conveyed to the roller gap (1) on the side of the smoothing mechanism opposite the roller entry and in that the strip II is guided out of the space between the smoothing mechanism and the returned strip I by means of a guide roller arranged at an oblique angle to the direction of travel and is then removed.

6. Process according to at least one of claims 1 to 5, characterised in that the strip I is cooled in the roller gap predominantly on the side which is running over the smoothing roller.

7. Process according to at least one of claims 1 to 6, characterised in that the extruded strip I is fed into the roller gap at a temperature in the thermoplastic range of the plastics material which is below the temperature required for fusion to the strip II.

8. Process according to at least one of claims 1 to 7, characterised in that the strip I is produced in a thickness of less than 300 microns.

9. Apparatus for performing the process according to claims 3 to 8, containing a slotted die (1) for extruding a thermoplastic strip of plastics, a smoothing mechanism arranged behind the slotted die in the direction of flow and containing at least two smoothing rollers (4, 5) forming a roller gap 2, at least one of said rollers (4) being coolable, characterised by means for returning the strip emerging from the roller gap into the roller gap.

10. Apparatus according to claim 9, characterised in that one of the smoothing rollers has a surface layer of an elastic material.

11. Apparatus according to claims 9 or 10, characterised in that it contains, as means for returning the strip a plurality of guide rollers arranged axially parallel to the smoothing rollers.

12. Apparatus according to claim 11, characterised in that the guide rollers determine the path of travel for the returned strip beyond the slotted die.

13. Apparatus according to claim 11, characterised in that the guide rollers determine the path of travel for the returned strip on that side of the smoothing mechanism which is opposite the roller entrance and in that another guide roller is arranged at an oblique angle to the direction of travel in the space between the smoothing mechanism and the path of travel of the returned strip.

## Revendications

1. Procédé de fabrication de feuilles de matière plastique par extrusion d'une nappe continue de matière thermoplastique au moyen d'une filière plate (1) et lissage de la nappe extrudée dans l'espace (2) entre cylindres d'une lisseuse avec refroidissement simultané au-dessous de la température de ramollissement, caractérisé en ce qu'en même temps que la nappe extrudée I, on fait passer dans l'espace entre cylindres une feuille continue II de la même matière plastique, lissée et refroidie au-dessous de la température de ramollissement, feuille qui est passée à travers l'espace entre cylindres (2) dans une phase précédente, et, après le refroidissement de la nappe extrudée I au-dessous de la température de ramollissement, les deux nappes I et II sont séparées l'une de l'autre.

2. Procédé selon la revendication 1, caractérisé en ce que les nappes I et II sont pressées élastiquement l'une contre l'autre dans l'espace entre cylindres.

3. Procédé selon la revendication 1 ou 2, caractérisé en ce qu'après sa sortie de l'espace entre cylindres (2) et après avoir été séparée de la nappe II, la nappe I est envoyée directement dans l'espace entre cylindres (2), et en ce que la nappe II est évacuée de l'installation d'extrusion.

4. Procédé selon la revendication 3, caractérisé en ce que le nappe I est dirigée vers l'espace entre cylindres en passant par-dessus la filière plate (1).

5. Procédé selon la revendication 3, caractérisé en ce que la nappe I est dirigée vers l'espace entre cylindres en passant du côté de la lisseuse opposé à l'entrée des cylindres, et en ce que la nappe II est détournée de la zone intermédiaire entre la lisseuse et la nappe I ramenée en arrière, au moyen d'un rouleau de renvoi disposé obliquement par rapport à la direction de circulation, et est évacuée.

6. Procédé selon l'une quelconque des revendications 1 à 5, caractérisé en ce que la nappe I dans l'espace entre cylindres est refroidie principalement sur la face qui passe sur le cylindre de lissage.

7. Procédé selon l'une quelconque des revendications 1 à 6, caractérisé en ce que la nappe I extrudée est envoyée dans l'espace entre cylindres à une température dans la gamme thermoplastique de la matière plastique, température qui se situe au-dessous de la température nécessaire pour son soudage à la nappe II.

8. Procédé selon l'une quelconque des revendications 1 à 7, caractérisé en ce que la nappe I est produite avec une épaisseur de moins de 300 µm.

9. Dispositif pour l'exécution du procédé selon l'une quelconque des revendications 3 à 8, comprenant une filière plate (1) pour l'extrusion d'une nappe de matière thermoplastique, une lisseuse qui est disposée en aval de la filière plate dans le sens de l'écoulement et qui contient au moins deux cylindres de lissage (4, 5) qui forment un espace entre cylindres (2) et dont l'un au moins (4) est refroidissable, caractérisé par des moyens pour ramener en arrière dans la fente de pincement (2) la nappe (I) qui sort de la fente de pincement.

10. Dispositif selon la revendication 9, caractérisé en ce que l'un des cylindres de lissage est garni d'une couche superficielle en un matériau élastique.

11. Dispositif selon la revendication 9 ou 10, caractérisé en ce qu'il comprend, comme moyens pour ramener la nappe en arrière, plusieurs rouleaux de renvoi disposés parallèlement aux axes des cylindres de lissage.

12. Dispositif selon la revendication 11, caractérisé en ce que les rouleaux de renvoi définissent un trajet de la nappe ramenée en arrière qui passe par-dessus la filière plate.

13. Dispositif selon la revendication 11, caractérisé en ce que les rouleaux de renvoi définissent un trajet de passage de la nappe ramenée en arrière du côté de la lisseuse opposé à l'entrée des cylindres, et en ce qu'un autre rouleau de renvoi est disposé obliquement par rapport à la direction de circulation dans la zone intermédiaire entre la lisseuse et le trajet de la nappe ramenée en arrière.

_Fig. 1_

_Fig. 2_

7